(19) Europäisches Patentamt
European Patent Office
Office européen des brevets

(11) **EP 2 391 090 B1**

(12) **EUROPEAN PATENT SPECIFICATION**

(45) Date of publication and mention
of the grant of the patent:
**21.08.2013 Bulletin 2013/34**

(51) Int Cl.:
***H04L 29/08*** *(2006.01)*

(21) Application number: **10305566.1**

(22) Date of filing: **28.05.2010**

(54) **System and method for increasing relevancy of messages delivered to a device over a network**

System und Verfahren zur Erhöhung der Relevanz von an eine Vorrichtung über ein Netzwerk gelieferte Nachrichten

Système et procédé pour augmenter la pertinence de messages fournis à un dispositif dans un réseau

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**30.11.2011 Bulletin 2011/48**

(73) Proprietor: **Prim'Vision**
**06560 Valbonne (FR)**

(72) Inventors:
• **Maurel, Georges**
**06000 Nice (FR)**
• **Giraud, Christina**
**06000 Nice (FR)**
• **Vassalluzzo, Barbara**
**06000 Nice (FR)**

(74) Representative: **Hautier, Nicolas et al**
**Cabinet Hautier**
**20, rue de la Liberté**
**06000 Nice (FR)**

(56) References cited:
**WO-A1-97/40447      WO-A1-2005/086437**
**WO-A1-2006/016885   WO-A2-97/26729**
**US-A- 5 721 827**

**Description**

The technical domain of the invention is the domain of the delivery of messages to a user at any time and at any place, in a non intrusive way and taking into account the context and the interests of the user.

A general objective of a message delivery system consists in selecting a message that will reach the recipient with a high level of receptiveness. This is particularly important for messages related to advertising. In order to increase receptiveness, the selection of messages generally takes into account user's personal preferences and user's current activity.

In order to work properly, those systems require user personal data that can be collected through specific questions asked to the end-user at the registration phase. Based on those collected data a server determines a user's profile. Those systems also track the end-user activity over the network. A server takes into account user's activity and user's profile to select the messages to be delivered with a high level of relevancy. WO2005086437 discloses a method for delivering messages to a device based on a determined user profile.

Although known systems are globally satisfactory, it would be advantageous to increase receptiveness of the delivered messages.

Therefore, it is an object of the invention to provide a method for increasing relevancy of messages delivered to a device over a network, comprising the following steps operated at the device:

- determining a user's profile, the user's profile comprising:
- a plurality of classes, each class being associated to a at least a level of interest that is function of at least one of the following parameters: the time, a parameter related to the place of the user, a mode of an allowed event that indicates if a detected event must be initiated by an application of the device when the user wants to access a delivered message or if a detected event must be initiated by any other action of the user or of another device.
- storing said user's profile in storage means of the device;
- receiving from a server via a network messages, each message comprising a content and a header, the header comprising a class that relates to the content;
- defining from the user's profile a probability of interest associated the class of the message;
- retrieving a threshold of interest;
- filtering the received message through storing the message in storage means of the device in case the probability of interest associated to the class of the message is higher than the threshold; rejecting the message in case the probability of interest

associated to the class of the message is lower than the threshold;

- detecting an event and determining whether said event matches at least one event type comprised in a predetermined list of event types;
- if said event matches at least one event type, then retrieving data related to at least one of the following parameters: the current time, a parameter related to the current place of the user, a mode of said detected event,
- retrieving in the user's profile classes associated to level of interest for which said parameters match said retrieved data, then ranking the retrieved classes in function of at least the level of interest, then selecting the class having the highest rank,
- selecting a message stored in the device and having a header comprising said selected class;
- displaying on the device a message invitation, the message invitation requesting from the user a consent to display the content of the message;
- receiving from the user a response to the request;
- in case the user consents to the display, then displaying the content of the message,
- updating in the user's profile the level of interest of the selected class taking into account the response.

All the steps of method according the invention are carried out at the device. Therefore, the steps of updating the user's profile and the step of selecting the message to be displayed can be carried out rapidly even if the communication between the server and the device is interrupted, is very slow or is inexistent. These steps can be carried out at runtime. The actual environment of the user can then be taken into account and the user's profile is also updated in real time. Thus, relevancy of the displayed message is sustained at any place and at any time.

While relevancy of the message selection is continuously maintained, privacy of the user can be preserved since no personal data needs to be sent to the server or spread over the network. All personal data are stored locally only. Data send to the server are anonymous and allows providing historical data. Yet, enhancing user's privacy usually leads to increase service subscription.

Optionally, the invention may comprise any one of the features below:

- The messages are advertisements.
- The device is a mobile phone or a set top box.
- The list of event types is stored in the user's profile.
- The user's profile comprises a matrix which indicates the level of interest for each class and per each combination of the following parameters: time, place and

event mode. The time refers to a finite number of interval periods of the day. For instance, the time may be any one of the following: morning, afternoon, evening, night. Events modes, designated interstitial modes gather events associated to the regular usage of the device itself, like outgoing voice/data call, editing and sending messages for a mobile device. Other events modes, designated application modes also gather events made available by the application itself, like a carousel agreed as storage of advertisements ranked among the ones of low level of interests.

- The place is a social context taken among at least one of the following: "home", "work", "leisure", "other"; each social context being associated to a time interval and a day. At a given moment, the determination of the place of the user is based on the time and the day of said given moment.
- The association of a time interval and a day for each social context is based on statistical observations of user's most frequent locations during a given time period.
- The probability of interest is computed from a general level of interest associated to the class of the message, the general level of interest being the average of at least some levels of interest of that class.
- Prior to receiving a message from the server, a provisioning module of the device receives from the server a provisioning indication that indicates to the device that new messages are available at the server.
- The device verifies the origin of the provisioning indication. The provisioning module connects to the server and retrieves the available messages. Thus, contrarily to current solutions operating in a "push" mode, the content provisioning is not decided at server. The invention operates in a "pull" mode. Therefore, the downloading of messages can be carried out at a time that does not disturb the user.
- The header comprises the following data: identification of the content, class, validity period of the message, event type, stereotype or specific audience, specific rules to be applied to select the message to be displayed.
- A class may comprise a plurality of classes of lower level or be part of a plurality of classes of higher level. For instance, class # 1 gathers all shoes; class # 1.1 is comprised in class # 1and gathers all sport shoes; class # 1.2 is also comprised in class # 1 and gathers all shoes with spike heels; class # 1.1.1 is comprised in class # 1.1 and gathers all tennis shoes; class # 1.1.1.1 is comprised in class # 1.1.1 and gathers all tennis shoes of a given brand.
- Preferably, the method identifies in the user's profile the class having the highest level of interest taking into account each of the following parameters: the current time, the current place of the user, the mode of said detected event
- According to a specific embodiment, the method comprises the steps of:

receiving in the user's profile a plurality of stereotypes, each stereotype being representative of a specific type of individual and being represented through a predefined data file indicating a level of interest for at least a plurality of classes;
identifying a stereotype corresponding to the user's profile. In order to determine the stereotype, a specific logic translates the interest and attitudes of these individuals into levels of interest for specific classes.

- The header comprises a stereotype. Upon reception of a message, the steps of defining from the user's profile a general level of interest associated the class of the message and the step of determining a threshold of interest are replaced by comparing the stereotype of the header and the stereotype corresponding to the user's profile. The stereotype is, like a profile, represented through a plurality of level of interests associated to a plurality of classes. A set of stereotypes are defined and these have the same definition on the server and on mobile. Upon reception of a message specifying a stereotype, the application compares the stereotype and the user's profile. More precisely, the device application compares for a given class the level of interest indicated in the stereotype with an average of levels of interest stored in the user's profile for that class. This comparison is carried out for each class that is present in both stereotype and user's profile. If the correlation is strong enough e.g. 70% of the levels of interest for classes that are in both stereotype and user's profile, then the message is stored, otherwise it is rejected. Preferably, the header comprises either a class(es) or a stereotype.
- The header comprises a rule that indicates a stereotype corresponding to the user's profile for which the message must be automatically rejected, skipping thereby the steps of defining from the user's profile the level of interest associated the class of the message.
- The header comprises the following additional data which is taken into account for filtering messages to be stored and messages to be rejected: validity period of the message.
- Optionally, at least one of the following additional data are taken into account for filtering messages to be stored and messages to be rejected: available space in the storage means of the device, number of already stored messages associated to the same class.

- The step of ranking the classes comprises ranking the classes only according to their respective level of interest. According to another embodiment, the step of ranking the classes comprises ranking the classes according to their respective level of interest

and according to at least one of the following: a frequency that indicates the number of times that a given class has been selected over a past period, a rotation or a random criterion.

- According to a preferred alternative embodiment one class is selected among a the ranked classes, the step of selecting one class among the ranked classes comprises the following steps:

  • selecting a set of classes having a rank higher than a selection threshold or selecting in the user's profile a set of classes through retrieving a predetermined number of classes having the highest rank of interest e.g. the set of classes gathers the N classes having the highest rank, N being predetermined;
  • among said set of classes, selecting one class through applying a rotation or a random criteria to said set of classes, preventing thereby to select the same class each time retrieved data are identical.

- The method may further comprise the following steps prior to the step of selecting a message stored in the device and having a header comprising said selected class: selecting a backup class; checking whether a message that has a header comprising the selected class is stored in the storage means of the device; if a message having the selected class is stored, then selecting said message, otherwise, selecting a message having a header comprising the backup class.
- Updating in the user's profile the level of interest of the selected class comprises: creating a log that collects at least data related to the class of the message, the time of the display, the place of the display, the response of the user to the request for consent. The log is used to update the level of interest of the class of the displayed message.
- Advantageously, the header comprises a plurality of classes and the log updates all classes that are indicated in the header. Classes of a given header can be independent or can be mutually hierarchically dependant forming thereby at least a class and subclasse(s) of that class.
- A log comprising the selected class and the response of the user to the request for consent is also sent to a server. The server collects the logs received from a plurality of devices and build historical data based on these logs. Based on the historical data, the server identifies messages to be sent to a given device. Advantageously, the log sent to the server only comprises anonymous data.
- In a preferred embodiment, the following steps are carried out for updating the user's profile. If the user consents to the display of the message, then the level of

interest of the class of the displayed message is increased by a first predetermined number of points; if the user rejects the display of a message, then the level of interest of the class of the displayed message is decreased by a second predetermined number of points.

- When no history is available the user's profile is initialized through conducting the following steps: storing in the device a plurality of stereotypes, each stereotype corresponding to a predefined profile and associating a level of interest for each class of a plurality of classes; asking questions to the user; based on the replies to the questions, identifying a stereotype among the plurality of stereotypes; initializing the user's profile with the levels of interest of the identified stereotype.
- In case no replies are available, the profile is update with a default profile wherein the classes have the same level of interest.
- In a preferred embodiment, updating the profile of the user comprises the following steps: selecting a class to be tested for which the level of interest is not available or is uncertain; selecting a message having a header comprising said class to be tested; displaying on the device a message invitation, the message invitation requesting from the user a consent to display on the device the content of said message; receiving from the user a response to the request; updating in the user's profile the level of interest of said class to be tested taking into account the response.

According to another feature of the invention, upon selection of a message and before displaying a message invitation, the method comprises a step of providing a trailer message arranged for drawing user's attention; then the trailer message ends allowing thereby the device to go back to its previous status prior the display of the trailer message, then the user can freely carry on his operation on the device; then detecting the end of the operation conducted by the user; then once the operation ends, conducting the step of displaying the message invitation. Preferably, the trailer message gives a clue of the content of the message to be displayed.

Another subject matter of the invention is a system non intrusive delivery of messages to a device in a network, characterized in that the device comprises:

- a profile module arranged for determining a user's profile, the user's profile comprising: a plurality of classes; at least a level of interest associated to each class, the level of interest depending on the class and on at least one of the following parameters: the time, the place of the user, a mode of the detected event,
- a provisioning module comprising reception means for receiving messages from a server via a network, each message comprising a content and a header, the header comprising a class that relates to the content; the profile module being arranged for:
- defining from the user's profile a general level of interest associated the class of the message;
- determining a threshold of interest;
- filtering the received message through storing the message in storage means of the device in case the general level of interest associated to the class of the message is higher than the threshold; rejecting the message from the device in case the general level of interest associated to the class of the message is lower than the threshold;
- detecting an event and determining (2) whether said event matches at least one event type of a list of event types stored in the device;
- if said event matches at least one event type, then retrieving data related to at least one of the following parameters: the current time, the current place of the user, the type of detected event;
- based on the retrieved data, selecting in the user's profile the class having the highest rank;
- selecting a message stored in the device and having a header comprising said selected class;
  the device comprising:
- display means for displaying on the device a message invitation, the message invitation requesting from the user a consent to display on the device the content of the message,
- a user interface for receiving from the user a response to the request, the device being arranged for updating in the user's profile the level of interest of the selected class taking into account the response

Others features, details and advantages of the invention will become more apparent from the detailed description given hereafter with respect to the drawings on which:

- figure 1 is a schematic illustration of an example of device according to the invention in communication with a backend.
- figure 2 is a schematic illustration of an example of device representing the interactions between the selection algorithm, the provisioning module, the profile file and the content storage.
- figure 3 is a diagram of an example of method according to an embodiment of the invention for filtering messages to be stored into the device and messages to be rejected,
- figure 4 is a schematic illustration of an example of profile module interacting with a play module, a synchronization module and a service & personalization module.
- figure 5 is a diagram of a method according to an embodiment of the invention,
- figure 6 presents an exemplary embodiment of the system,
- figure 7 presents an exemplary embodiment of the system,
- figure 8 presents a chronogram of the intercommunications between modules,
- figure 9 is a diagram of a first embodiment,
- figure 10 is a diagram of a second embodiment,
- figure 11 illustrates a number of examples of avatars personalized according to user's profile or according to the content of the message.

The invention can be applied to any kind of end-user equipment or device receiving data over a wired or wireless network. A device, in the meaning of the invention, can thus be a mobile phone, a smart phone, a game console, a set top box, as well as a branded box, etc. The invention comprises a server and software modules installed on the device.

The invention will be described in relation with its preferred embodiment wherein the message to be delivered is an advertisement and wherein the device is a mobile device such as a mobile phone operating over a wireless network.

Even if advertisement is a particularly advantageous application of the invention, the system can be configured in order to treat different kind of contents.

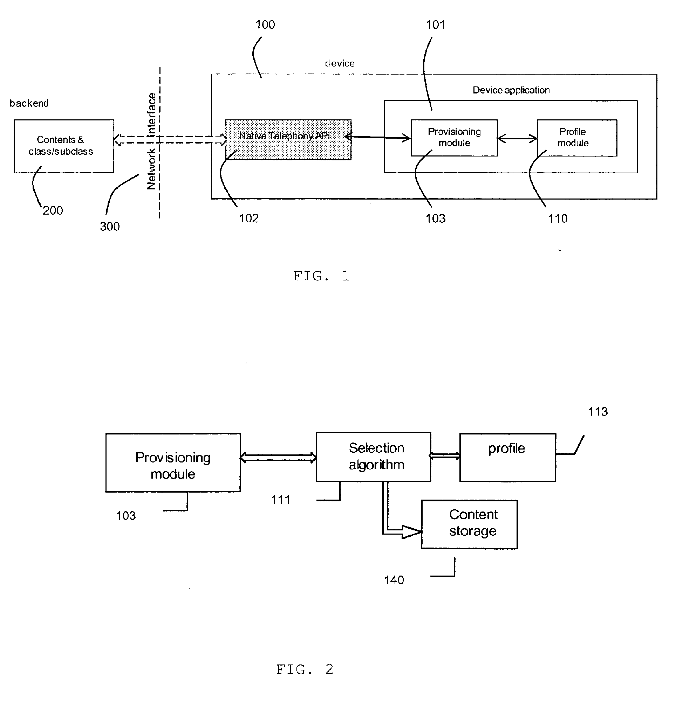

With regard to figure 1, the device 100 comprises an application designated device application 102 in the present description. The device application is resident in the device. The device communicates via a network 300 with a backend 200 typically linked to a server.

The backend 200 comprises contents such as messages. Messages are transferred between the backend and the device application in a pull mode.

The backend 200 informs the device 100 application about the availability of new contents by means of a provisioning indication. Typically, the provisioning indication is a silent SMS, i.e. a SMS captured by the device application and that is never displayed in the mobile Inbox messages. Therefore the user does not know that a provisioning indication is received.

The device application 101 is made up of two modules, the provisioning module 103 and the profile module 110. The provisioning module 103 receives the provisioning indication through a mobile telephony API 102 which it interfaces to.

The provisioning module 103 processes the received provisioning indication verifying its origin that must be the backend 200. The provisioning module 103 verifies the text of the SMS that must indicate the action requested, i.e. provisioning of messages available at the backend 200.

The provisioning module 103 connects to the backend 200 to retrieve the contents. Therefore, the invention operates in a "pull" mechanism.

Preferably, local provisioning criteria of the device are verified before opening the connection. Such provisioning criteria are for instance:

- availability of the network, in order to guarantee the correct transfer of the data,
- status of the battery in order to avoid a drop of connection for lack of resources,
- memory space of the device to verify that the messages can be stored into the mobile. The space of the memory reserved to the contents storage can be specified by the device application itself.

The message that are retrieved by the provisioning module 103 from the backend 200 are records containing a content, typically an advertisement, and header comprising a set of header parameters. Examples of header parameters are given below:

- identification of the content.
- class of the message. The class describes the content. A class may comprise a plurality of classes of lower level or be part of a plurality of classes of higher level. Therefore, all classes define a tree of classes. In the following a given class comprised in another class is designated sub class of that other class. Thus a class may comprise a number of sub classes.
- indication of the validity period of the content.
- indication of the allowed mode of event that can trigger the steps of selecting and presenting the messages to the user.
- the header may comprise the following optional parameters: indication of the stereotypes or the specific audience the message is addressed to.
- As explained above, a stereotype is a pre-defined data file rating the class of the advertisements based on level of interest. A set of pre-defined stereotypes are transmitted to the profile module 110 by the provisioning module 103, which receive them from the backend 200. On the basis of replies to questions, or on the basis of the user's behaviour, the profile module 110 determines the stereotype that best corresponds to the user's profile. The stereotypes transmission happens independently from the message transfer. This happens only at initialization.
- 'access code', 'probe'. These header parameters are specifications of the rules to be applied by the selection algorithm of the profile module. These header parameters will be described below with further details.

The provisioning module 103 queries the profile module 110 using a sub-set of header parameters of the received header, to make a decision on storing or rejecting the received content. This process takes place for all incoming contents, one by one.

The provisioning module 103 provides following inputs to profile module 110: class and subclasses of the message, stereotype, access code.

If the header indicates that the message is a probe, then no filtering is carried out and the message is stored unconditionally.

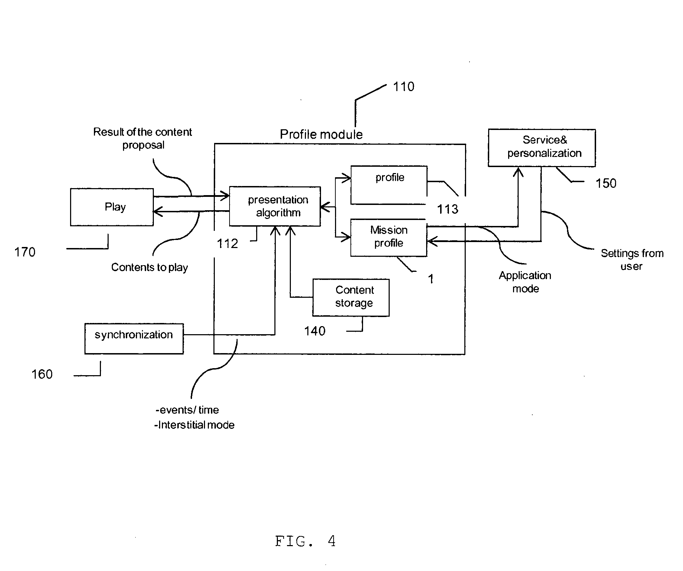

The profile module 110 comprises three sub modules: a selection module 111 also designated selection algorithm; a presentation module 112 also designated presentation algorithm; an update module also designated update algorithm. The profile module 110 also comprises a main data file, called profile file 113 (see figures 2 and 4)

The three algorithms of the invention can be updated over the air. The server can communicate to the device application any update for each single algorithm.

Selection Algorithm

The selection algorithm 111 receives the header parameters from the provisioning module 103 and decides if to store or reject the message.

This task is accomplished by using an internal data file, the profile file 113.

The profile file 113 is a multi-dimension matrix which rates the class of the advertisements based on level of interest. The matrix indicates the level of interest for each set of class and subclasses and per different combination of the following parameters:

- Event mode: it refers to the mode that triggers the selection and the presentation of the message to the user. Preferably, two modes are specified: application mode and interstitial mode.

Application mode refers to all actions initiated by the user in order to access the content of the stored messages. Then, the device application of the invention detects this mode of event. For instance, the device application according to the invention detects that the user opens a carousel of stored advertisements.

Interstitial mode gathers events initiated by the user or by another device and which are not directly carried out in order to access the content of the stores messages. These events are associated to the regular usage of the mobile itself, like outgoing voice/data call, editing and sending messages.

- Time: it refers to interval periods of the day, for example: morning, afternoon, evening, night. This description makes reference to four period of time.
- Place: Advantageously the place is not an exact location retrieved from location based services, global positioning system (GPS) etc. According to a preferred embodiment of the present invention, the place, also called social context, refers to most frequently environments the end-user lives in. The social context is taken among at least one of the following: "home", "work", "leisure", "other"; each social context being associated to a time interval and a day. The association of a time interval and a day for each social context is based on a statistical observation of user's most frequent locations during a given time period. A social context is derived from a statistical observation of the user's location.

A method to determine a set of social contexts may for instance comprise the following steps: sampling the user's location over time according to a first period, e.g. 10 mn thus providing 144 samples per day, analysing the data sampled over a past time interval, e.g. 30 days, combining a time interval to a most frequently sampled location during said time interval to form a social context. Said method can reapplies the analysing and combining steps over time according to a second period, e.g. each day.

As an example, four social contexts can be used/defined. Be they "home", "work", "leisure" and "other". "home" and "work" are respectively the social context when/where the user is at home or at work. "vacation" is the social context when the user is resting. "other" may be another social context not included in the previous. By statistically analysing the location with respect to the time, it can be determined the following four social contexts:

| Social Context | Start time | Stop time |
|---|---|---|
| Home | 0AM<br>6PM | 7AM<br>0AM |
| Work | 8AM | 6PM |
| vacation | weekend, public holidays | |
| Other | | all other combination |

The determination of a social context may start from given or usual times intervals, and determines associated most frequent locations to each such interval. Here the determination is partially dynamic, inferring from given data explicitly configured by the user.

Here the locations can be considered, as explained previously, either on a cell basis (GSM-CGI) or on a geographical area location basis (GPS).

Once defined, said social contexts, are dynamically maintained/updated by a periodical sampling and analysis process, e.g. each day, over a rolling window, e.g. 30 days.

Once defined, said social contexts may be used to define an allowance over an event or to qualify a preference over an advertisement. Thus a given event may (or may not) be allowed only during "work" context. E.g. advertisements related to sports, holidays may be given a preference during "home" or "leisure" context, while technical or corporate advertisements may be restrained to "work" context.

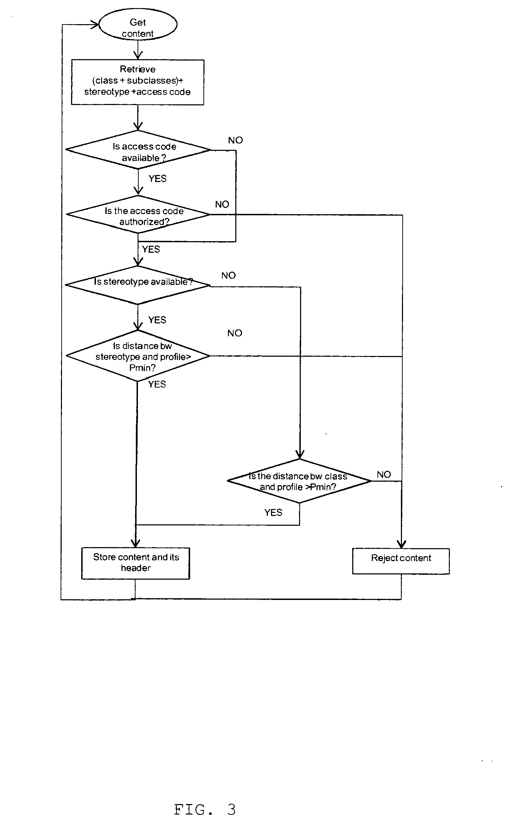

The process of filtering the messages to be stored and the messages to be rejected will be now described with respect to figure 3.

When a message is received from the backend 200, the selection algorithm 111 retrieves the header parameters such as the class and subclasses, the stereotype and the access code. In case the header comprises an indication that the message is a probe, then the message is directly stored, skipping thereby the filtering.

The access code identifies at a least stereotype that must not receive the advertisement. The selection algorithm 111 determines whether the profile of the user is close to the stereotype of the access code. In case the profile of the user is close enough to the stereotype of the access code, then the advertisement is rejected. In order to determine whether the user's profile is close enough to the stereotype of the access code, the comparison method indicated in the following paragraph can be carried out.

In case the message is not rejected at this stage, the selection algorithm 111 1 checks whether the header comprises a stereotype. If this is the case, then the selection algorithm 111 defines the distance between the stereotype of the header and the profile of the user. The distance is defined as its closeness to the profile. A profile is considered close to a stereotype if there is a sufficient number of matches between levels of interest of main classes. Upon reception of a message specifying a stereotype, the application compares the stereotype and the user's profile. More precisely, the device application compares for a given class the level of interest indicated in the stereotype with an average of levels of interest stored in the user's profile for that class. This comparison is carried out for each class that is present both in stereotype and in user's profile. If the correlation is strong enough over the class that are in both stereotype and user's profile, then the message is stored. For instance, if there is a 70% match between the levels of interest of classes that are both in stereotype and in user's profile, then the message is stored, otherwise it is rejected.

If that distance is short enough, then the message is stored in storage means of the device. If no stereotype is indicated, but it has been already described, the selection algorithm 111 computes a probability that the user will accept to view a message of said class. To this end, the selection algorithm 111 determines from the profile file 113 a general level of interest of that class indicated in the header. Typically, the general level of interest is the average of all levels of interest of said class and subclasses of that class or is an average of a number of levels of interest of that class and eventually of subclasses of said class.

The general level of interest is associated to a probability that the user will accept to view the message. In case the probability is higher than a threshold, then the message is stored in the device, otherwise the message is rejected.

While the preferred embodiment has been described above with regard to figure 3, another embodiment of the invention comprises only the steps of filtering the message on the basis of the class/subclasses as unique parameter. In other words, the steps of filtering incoming messages on the basis of the access code or on the basis of a stereotype indicated in the header are optional.

Another embodiment of the invention comprises only the steps of filtering the message on the basis of the stereotype indicated in the header. In other words, the steps of filtering incoming messages on the basis of the access code or on the basis of a class/subclasses indicated in the header are optional.

Optionally, at least one of the following additional data are taken into account for filtering messages to be stored and messages to be rejected:

- the header may comprise an indication of validity period of the message. In case the validity has expired, then the message is not stored.
- available space in the storage means of the device; number of already stored messages associated to the same class; validity. These criteria are taken into account by the algorithm to decide how many messages can be stored.

Presentation algorithm

The presentation algorithm 112 detects the appropriate moment, i.e. event, for selecting and retrieving a message from the local storage. The presentation algorithm will be described in regard with figure 4.

As a reminder, the events can be classified in two modes as defined above: interstitial mode and application mode. Definitions of event modes is given above. As a reminder interstitial mode gathers events initiated by the user or by another device and which are not directly carried out in order to access the content of the stored messages. The events of the interstitial mode are designated "interstitial event". These events can be taken among the follow events:

"outgoing call setup" said event occurs when the user tries to establish an outgoing call with the device;
"outgoing call on hook" said event occurs when the user hangs up/finishes an outgoing call;
"ingoing call received" said event occurs when an entering call occurs and the user receives it;
"ingoing call on hook" said event occurs when the user hangs up/finishes an ingoing call;
"electronic message editor start" said event occurs when the user starts the electronic message editor; A electronic message is to be considered as any kind of electronic message, e.g. SMS, MMS, etc;
"electronic message send" said event occurs when the user sends the edited electronic message, also indicating that he has finished editing;

"electronic message received" said event occurs when a new ingoing electronic message is received at the device;
"electronic message read", said event occurs when the user has read said ingoing electronic message, also indicating that the receive operation is finished;
"web browsing open" said event occurs when the user starts the web browser;
"web browsing close" said event occurs when the user ends the web browser, also indicating that the web browsing operation is finished;

Others kinds of interstitial events may be used, associated with secondary functions of the device:

"alarm setup" said event occurs when the user configures an alarm on the device;
"alarm outcome" said event occurs when said alarm ends and "rings";
"GPS destination reached" said event occurs when a predetermined destination is reached;
These are only samples, and the one skilled in the art would naturally find many other interstitial events.

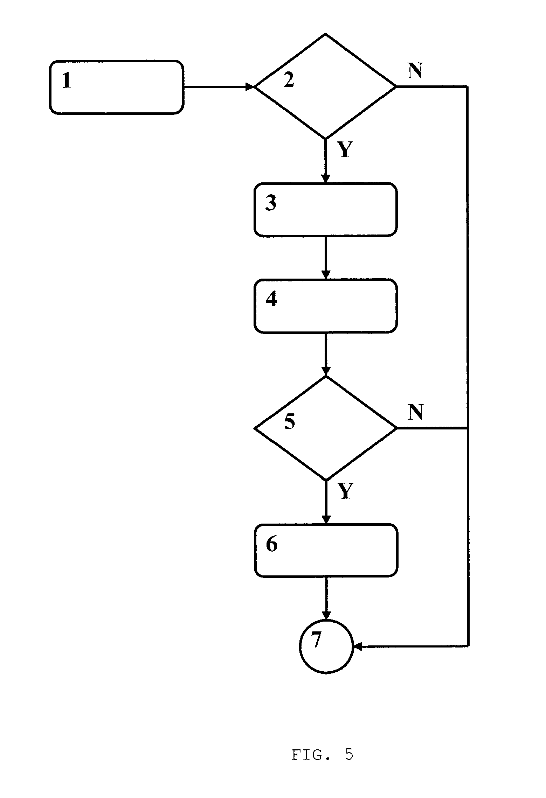

The event is chosen by the end-user Graphical User Interface (GUI). The invention comprises a service & personalization module 150 in charge of getting the end-user settings. The profile module 110 interfaces the service & personalization module 150. The settings are related to the events that will trigger the presentation.
These settings and any of their updates are inputs for a mission profile 114 arranged for communicating with the profile file 113, the service & personalization module 150 and the presentation algorithm 112. The mission profile 114 transfers this information to the presentation algorithm 112.
Events belonging to the interstitial mode are detected by a synchronization module 160. When an event of the interstitial mode is detected at the device, the synchronization module 160 informs the presentation algorithm 112.
The service & personalization module 150 informs the presentation algorithm 112 of events belonging to the application mode
The presentation algorithm 112 verifies through the mission profile 114 whether the detected event belongs to a list of event type stored in the mission profile 114. Advantageously, the events of that list are selected by the user.
In case the detected event does not match any event of the mission profile 114, then the process ends and no message is selected.
In case the detected event does match at least one of the events indicated in the mission profile 114, then the presentation algorithm 112 retrieves additional information from related functions. In particular, the presentation algorithm 112 retrieves the current time and the place of the user. Definition of the time is given above. An example of determination of the place is also given above. At a given moment, the determination of the place based on prediction of social contexts based on time and day, does not need any connection with a location based service or GPS at said given moment. Moreover such determination of the place is very quick and saves battery.
Using these three parameters, i.e. time, place and event mode, the presentation algorithm 112 queries the profile file 113 to get a set of class and subclasses which have the highest level of interest for the end-user.
Preferably, a rotation criterion or a random criterion is applied to allow the presentation of different set of classes and subclasses which are locally available and that are associated with a high level of interest. Thus, in case the same set of parameters is provided (same time interval, same place, same event mode) various sets of class/subclasses can be selected.
The profile file 113 gives back a primary set of class/subclasses and a backup set of class/subclasses. The profile file 113 always chooses some set of class/subclass which have a correspondent stored message. There is no possibility that the research done by presentation algorithm retrieves no class or no message. When there is no more message corresponding to a set of class/subclasses these message storage means, designated content storage 140, informs the profile file 113. Therefore, the profile file 113 always finds in the content storage 140 a message matching the parameters.
The presentation algorithm 112 selects from the content storage 140 the message that matches with these retrieved parameters and transfers it to a play module 170.
Once an event is detected and once a message is selected, the device operates steps to present the message to the user in a non intrusive way. These steps are now detailed in regard with figures 5 to 10 and with regard to the preferred embodiment of the invention wherein the message is an advertisement.
With respect to figure 5, the method starts at a first step 1 triggered by the detection of an event. Upon arriving, said detected event is, at step 2, filtered or checked as described above. The filtering step 2 thus outputs either a Yes (allowed) or No (rejected) answer.
In case the interstitial event does not match any interstitial event listed in the user's profile, then the method ends at step 7.
In case the interstitial event matches at least an event listed in the user's profile, then the method goes on with step 3, where an advertisement message is selected.

The selected advertisement comprises at least an advertisement invitation and a main part also called content. The method then proceeds to step 4 where said advertisement invitation of said selected advertisement is displayed on the device. Since the display of said invitation is rather short (about 2 to 3 seconds), the interruption/intrusion does not last too long.

Then, at the end of the advertisement invitation display step 4, the method proceeds to step 5 and requests the device's user to give his consent to display the corresponding main part of said selected advertisement. Since said main part is longer than the invitation, the intrusion may becomes more important. So prior to burden the user, the method asks for his consent, in order to display.

If the user's answer is No, or no answer is given after a given interval of time, no consent is presumed since default is opt-out, and the method ends at step 7.

If the user's answer is Yes, user's consent has been positively obtained and the method proceeds to step 6.

At step 6 the method displays on the device said main part of said selected advertisement. Said main part may last longer than the invitation, up to e.g. 7-15 seconds. At the end of the display of the main part of the advertisement, the method carries on to step 7 where it ends.

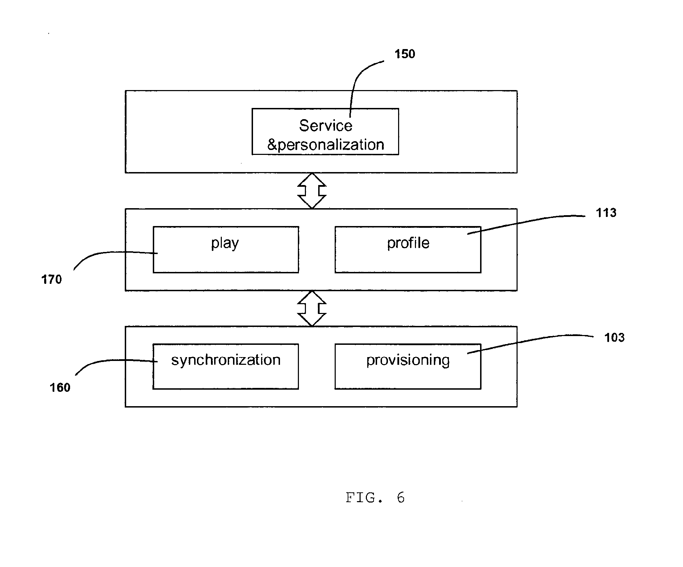

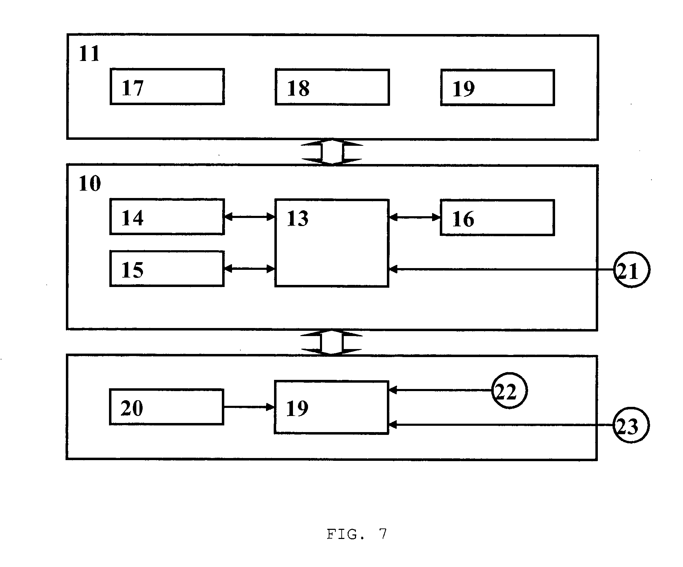

With reference to figure 6 and 7 description will be given of exemplary systems arranged to implement such a method. Said system may e.g. be organized in three parts: a core 10 comprising the main modules, a user interface 11 and a set 12 of low level operating system dependent modules.

In the core 10 one can find a play module 13 being the main module in charge of applying the method. Said play module 13 relies on other modules such as a content manager module 15 in charge of managing the advertisement and among other steps of selecting an advertisement best matched to the user. The profile manager 14 is in charge of establishing and maintaining all the data elements of the user's profile and to provide to others modules the necessary data from said profile when needed or asked. The log manager 16 is in charge of establishing, and distributing logs.

In user interface 11 one can find all the modules able to interface with the user. Among others it may comprises a sound player 17 in charge of playing sounds to the device's user, a graphical engine 18 in charge of displaying visual elements such as text, banner, image, animation or avatar to the user. At least an input manager 19 is in charge of reading inputs from the user.

Low level operating system dependent modules may comprise timers 20, e.g. the one used to generate an "end of time interval" event. One can also find here an event detector module 19 in charge of detecting the events on the fly.

Said events may come from at least three sources. A first source 21 is related to other applications, such as secondary applications present on the device. Source 22 represents events originating from the operating system itself, such as the outcome of an operating system timer. Source 23 represents events originating from the hardware through the operating system, e.g. a key press.

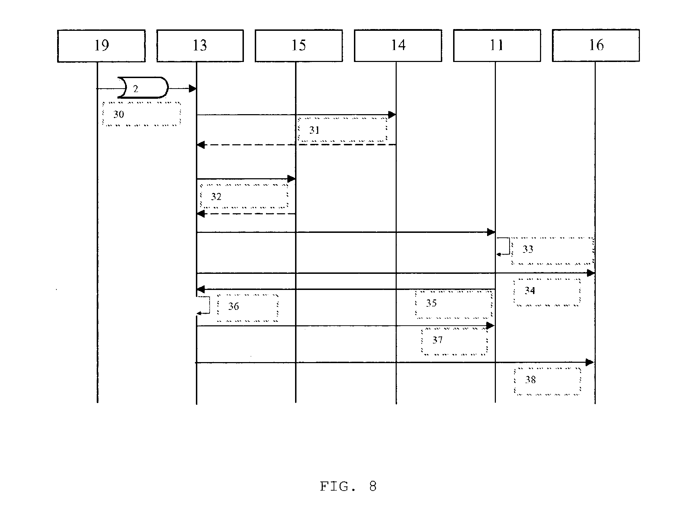

All of the aforementioned modules exchange data in any known manner in order to get their necessary data. The chronogram of figure 8 illustrates a possible embodiment of such intercommunication. The boxes on top of figures are the different modules figured by their reference number in figure 1. The method starts with an event detected by the event detector 19. Said event is filtered 2 at transition 30 toward play module 13. Then the play module 13 asks 31 the profile manager 14 for the user's profile. The profile manager 14 provides in return 31 said user's profile in part or in whole. Then the play module 13 asks 32 the content manager 15 for an advertisement matching said user's profile. The content manager 15 provides in return 31 said selected advertisement. The invitation of said advertisement is then send to the user interface 11 to be displayed 33. The user interface then asks for the user consent. The user's response is then sent back 35 to the play module 13. According to said response, the play module 13 either skips or decides to display the main part of the advertisement. If display is decided, the play module 13 sends 37 said main part of the advertisement to the user interface 11 to be displayed.

Two others communications 34 and 38 are figured to indicate data transfers from play module 13 to the log manager 16.

In order to be sure the user is present and available to use or look at the device, with a better opportunity of drawing his attention, an advertisement proposal is triggered by an interstitial event. As a reminder, in the present patent application, an interstitial event is an event that can be detected and identified at the mobile device and that is supposed to draw the attention of the user. The interstitial event can be initiated by the user or by an external factor.

Interstitial events issued from the device (low level events) are captured by the event detector module 19. Said event detector 19 implements a set of observers/listeners using the platform specific application programming interfaces (APIs). When an interstitial event occurs the event detector 19 processes it and notifies the play module 13 with this event.

As described above, the user is given the possibility to configure the mobile device application to filter some events, that means the user has the possibility to indicate to the application which interstitial events must be detected. Typically the user selects interstitial events among a list of possible ones.

These preference configurations are accessible and defined through the user interface 11 and are stored locally in the user's profile. As further detailed below with reference to step 2, when an event is detected by the mobile device, the detected event is compared to the list of events selected by the user that is stored in the user's profile. In case the detected event matches at least one selected event, then the advertisement invitation or the advertisement trailer can be displayed.

Therefore, through enriching the user's profile with interstitial event selection parameters, the user controls the advertisement service, preventing thereby any unwilling intrusion.

The permission of each interstitial event interception is checked each time prior to this interception ensuring priority of user critical events such as emergency calls.

Interstitial events (applications events) from messaging and web activities are intercepted on a different channel using the same approach with observers/listeners.

As messaging is also used by the server to send system control commands to the mobile device application, the event detector 19 module distinguishes between these types of electronic messages and considers only non system electronic messages as interstitial events. When an event is identified, the event detector 19 module notifies the play module 13 with the occurred event.

The event detector 19 module is also responsible of generating random/periodic events. It implements a timer which periodically or randomly triggers these events within a given time interval (event: "end of time interval").

In addition to capturing messaging and call activities the event detector 19 module captures also foreground screen changes and key events entries. These two functionalities can also be used as interstitial events.

One important feature of the invention is the device user's profile. Said user's profile comprises all the information about the user preferences, habits and contexts and user's settings related to trigger necessary to the mobile device application.

Among other, said user's profile comprises, for each interstitial event or event type, some data element that permits to determine if a given interstitial event is allowed. This can takes the form of a table containing each event or event type/class. The allowance can be indicated in said table in the form of a Yes/No element in regard of each event or event type.

Allowance can also be indicated in the form of time or times, time being indicated by at least one time interval. E.g. a given event can be allowed (respectively not allowed) on a given interval of time. Said table then mentions in regard of the event one or more time intervals, e.g. Monday 13:00-15:25, Tuesday 00:00-15:00 and 17:00-23:00 and not 18:00-18:30, etc. Said time intervals may be expressed per day, per week, etc, combined using any Boolean expression, or in any other known way.

Allowance can also be indicated in the form of location or locations. Event becomes allowed when the device (and the user) is located (or not located) in any of the mentioned location(s). Said table then mentions in regard of the event one or more locations, geographical area and/or combinations of them.

In this description location of a device is considered on two scales. On a first coarse scale, the device comprises GSM or other equivalent mobile phone capacity. Location can be considered by looking at the cell to which the device is connected, that is the cell global identifier (CGI). On a second finer scale, the device comprises GPS or other equivalent fine location determination function. Location can thus be considered by indicating areas using geographical coordinates.

Allowance can also be indicated in the form of social context or contexts as described above.

A user's profile may also contain other elements to help selecting an advertisement. E.g. an editable list of authorized content providers may be included in said user's profile to be considered during the step of selecting an advertisement. This allows creating and maintaining a white list and/or a black list. Said lists may be explicitly edited by the user, or implicitly/dynamically edited by the mobile device application following a repeated acceptance (white list) or a repeated rejection (black list) by the user.

A user's profile further comprises device user's historical behaviour in function of time, place and social context. This can be in the form of a memory of the acceptations/rejections of the user when asked for his consent or in any compiled form. Such information may be used to drive the step of selecting an advertisement.

When an allowed interstitial event occurs, the application looks for a stored advertisement that best matches the user profile in term of user preferences in the specific context, e.g. time and place of the event.

More precisely, when an allowed interstitial event occurs, the play module 13 asks the content manager 15 to fetch an advertisement according to the user's preferences and previous behaviour e.g. historical user data, related to time, location and/or social context. According to the user's profile the play module 13 requests from the content manager module 15 to provide an advertisement which matches the user's personal preferences in the user's profile. The content manager 15 selects the advertisement following its properties and the user's profile. The advertisement selected is then filtered according to the user's access rights, location, authentication settings, etc.

One method to select an advertisement that best matches device user's profile uses a Pearson's correlation formula:

$$r = \frac{\sum XY - \frac{\sum X \sum Y}{N}}{\sqrt{\left(\sum X^2 - \frac{(\sum X)^2}{N}\right)\left(\sum Y^2 - \frac{(Y)^2}{N}\right)}},$$

where

r is a correlation coefficient as close to 1 as the correlation is good,

X is the class/subclass. X is predefined on Server and transmitted to the device application. This means that every time an advertisement is provisioned it has not only a class but can also have a set of subclasses (in a range of Z).

Y is the level of interest for each class/subclass,

N is the total number of different classes/subclasses.

In the present invention a class and/or a subclass gathers service(s) and/or product(s) and/or brand(s). A subclass is a sub division of a class. For instance, a class gathers all advertisements related to 'shoes'; a subclass of 'shoes' gathers all advertisements related to 'soccer shoes'; another subclass of 'shoes' gathers all advertisements related to shoes from a given brand.

The best matching advertisement is the advertisement with the correlation coefficient r closest to 1.

Since the aim of the application is to entrust the user and to create an entrusting relationship, in order to get said user more acceptant toward chosen advertisement, it is important to avoid possibly malevolent contents. It is then interesting to secure the application to keep the user safe. For that reason the content provider, guarantor of transmitted contents is authenticated by the agent in the agent-server communication before delivering an advertisement to the user's device. Such authentication may be done by any known authentication method such as e.g. a certificate exchange and verification.

To inform the user that the application operates correctly, is trustable, and as a consequence that all transmitted contents are not spam it may be advantageous to display a security logo on the user's device, e.g. by mean of graphical engine 18.

As previously mentioned, an advertisement comprises an invitation and a main part. In order to allow the user to give an informed and meaningful consent when asked for, said invitation is indicative of the content of the main part of the advertisement. The invitation thus provides pertinent information about the proposed advertisement content. Said advertisement invitation comprises a visual part. Said visual part could be optional in certain embodiments.

Said visual part of an advertisement invitation may comprise at least one of the following: a video, a text, a banner, an animation or an image, or any possible combination of these.

Since said invitation may be viewed as a tolerated, but not explicitly allowed/consented interruption of the normal use of the device by the user, its display duration on the device must preferably be kept short. A duration of no more than 3 seconds may be considered acceptable, while maintaining a duration long enough to provide enlightening information about the whole advertisement proposed.

In order to better draw the user attention to the device and to the visual part of said advertisement invitation, said advertisement invitation may further comprise a sound part. Said sound part may be optional. Said sound part may be played during the display duration of the visual part. Said sound part may comprise an audio content, such an option is however restrained to the short duration of corresponding visual part. Preferentially said sound part is a short sound, such a jingle, or a sound strip, preferentially displayed at the beginning or just before the display duration of the visual part, in order to draw the user attention toward the display of the device so as to make him look at the visual part of said invitation.

Said sound part may be personalized according to user's profile or configured according to the content of said advertisement, to content provider's preferences or to service provider's preferences or network operator.

In addition, in order to personalize, and to increase the user's confidence to the mobile device application, the invitation may comprise a graphical animated avatar or any other graphical representation that accompanies its display.

The avatar adds further clarification of the advertisement content, e.g. by mean of visual accessories related to the content of the proposed advertisement. The avatar is typically a graphical 2D/3D interface. Said avatar is able to interact with the user. It is a user's alter ego and part of ensuring the mobile device application. The avatar is a virtual representation of each specific user. The avatar gives to the mobile device application a personalized character which in turn help making the user more comfortable using the application.

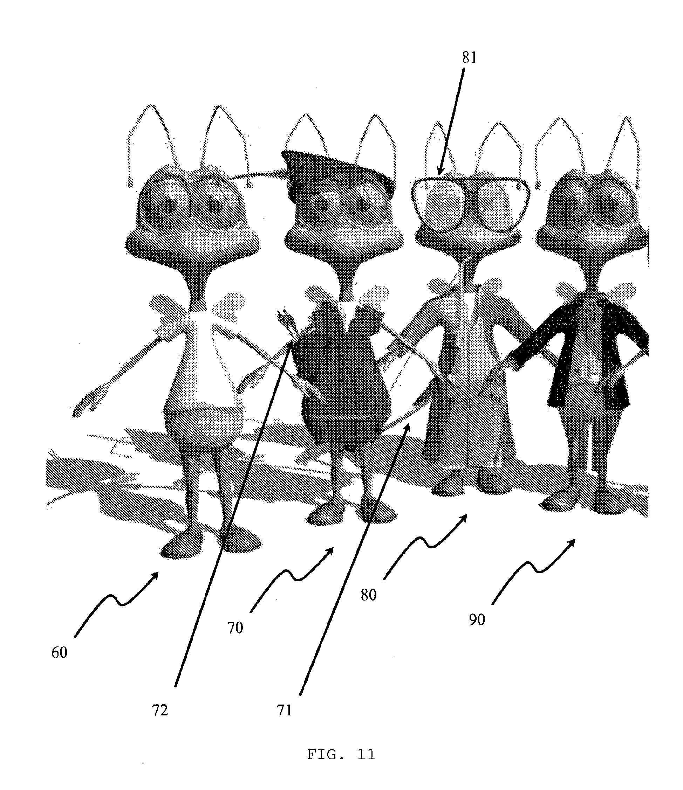

The avatar is typically displayed during the display of the advertisement invitation. Four avatars are illustrated at figure 11.

Said graphical avatar may be personalized according to user's preferences, or may be configured according to the content of said advertisement, to content provider's preferences or to service provider's preferences. The avatar may be selected and have a different behaviour and dressing, depending on the proposed advertisement. The avatar is part of the advertisement invitation, it may include elements of the user's profile and/or it may be related to the advertisement proposed.

Every time an advertisement is selected by the mobile device application, additional information are available thanks to the parameters transmitted by the server together with the advertisement. These parameters specify for example the category of the product (for example: retails, alcoholic drink, classic shoes ...) and/or the brand.

Different possibilities may be encountered:

- the content provider provides an image/animated image to associate to the advertisement at the campaign definition phase. If so this image is incorporated and taken as invitation;
- the content provider provides only a Brand image. Every time an advertisement is proposed for this Brand the related image is used;
- the content provider has not provided anything. The mobile device application uses "standard" images, e.g. for each product category.

In order to have the invitation adapted to the context, as an example, the avatar can be dressed differently every time. For example if it is raining, the avatar can use an umbrella. If it sunny the avatar can wear sun glasses. Such context information can be retrieved thanks to the interaction with other application of the device.

Other possibilities are related to the user's location or social context. If the user is at home or in a "home" social context, the avatar can be dressed in slippers. If the user is at the office or in a "work" social context, the avatar can hold a PC (of course this depends also if the user is a man or woman and his/her job, all of these can be personalized in the user's profile. If the advertising message to be displayed relates to music, then the avatar may be animated so as to dance.

In practical, the advertiser or content provider sends data concerning the product/service/company to be advertised (e.g "product category" = "high tech device"). This can be done through filling an online form. These data enable to locally, on the device, select features and accessories that define the avatar, e.g. clothes with high tech features such as a shirt with lights that can be retrieved from a local database. The application also locally selects other features or items (e.g. sun glasses, computer, etc.) according to the user's profile and other data (weather, location, etc...). All these data may be used as input of a matrix that enables defining the avatar. E.g. avatar may wear a shirt with lights and sun glasses and use a computer.

Figure 11 illustrates the customization of various avatars. Avatar 60 does not wear specific items. It may be the avatar selected by the user and as displayed by default by the mobile device application.

Avatars 70, 80, 90 are customizations of avatar 60 with additional dressing or items.

Avatar 70 has a bow 71 and arrows 72. Avatar 70 may be displayed when the mobile device detects that the user has reached an archery club or when the message to be displayed relates to archery equipments, services, or information.

Avatar 80 wears eyeglasses 81. Such item 81 can be selected by the user to personalize the avatar. Such item 81 may also be automatically incorporated to the avatar when the device detects that the user enters in an optician shop or that the user is located at his work place which is a laboratory.

The user may also customize the avatar 90 with a tail coat and a bow tie as illustrated by avatar 90.

The visual part, sound part, and avatar are independent. They could start in different timing.

An update of visual part, avatar and/or jingle can be provided to the user's device, by the network, over-the-air (OTA).

In order to further protect user's privacy, the display of an advertisement invitation (and of course also of a main part) on the device may be inhibited. In case of such an inhibition, the display does not even start. This is equivalent to an interstitial event that would not be allowed.

Such an inhibition may be active when the device is in silent mode or meeting mode, thus in accordance with a configuration parameter of the device. Such an inhibition may also be active when the device sound volume is set to zero, since in that case user has indicated that he does not want to be disturbed audibly. Moreover, said invitation has less opportunity to reach its intended target, the user's attention, since any audio part/jingle could not be heard. Such an inhibition may also be active when the user has configured a do-not-disturb option, thus in accordance with a mobile device application configuration parameter.

In a similar way, since the burdening caused by advertisement must be reduced to the least extent, the advertisement display must be kept to a low priority with regards to telephony events only. More generally, the priority of the advertisement display complies with conventional priority standards for mobile phones. Thus, the advertisement display priority is the same as other third-party applications and is lower than the telephony functions. Consequently, the display on the device of an advertisement invitation or of a main part of an advertisement may be interrupted by an incoming phone call. So any event with a stronger priority, that is virtually all events, may interrupt a display. As an example, an incoming/ingoing call ringing the device is displayed on the device at the same time of advertisement play, so that the user may be able to answer to said ingoing call. The user can decide to answer to the call and the video is stopped or to continue playing the advertisement and simply ignores the incoming call. The events that are prioritized under or over an advertisement display may be configured.

Following a different approach, during the display on the device of an advertisement invitation or of a main part of an advertisement, some functions of the device such as user keys may be locked. Of course, these functions are automatically unlocked in case at least a function with a higher priority is initiated. For instance, the keys are unlocked upon reception of an ingoing call. The application is able to check by itself if the advertisement has been completely played or not. Because for example, if there is an incoming call during advertisement play and the user decides to answer, the application knows that the video has been stopped and consequently it will not assign rewards and will propose the video later on. This can be of interest to measure an advertisement campaign impact, and help determine if and when a reward must be allocated to the user to have seen an advertisement. Each operation may thus be configured as lockable or not. For example during a display, be it invitation or main part, the user may not be allowed to start an outgoing call. Such an operation can wait. However he may be allowed to answer an ingoing ringing call.

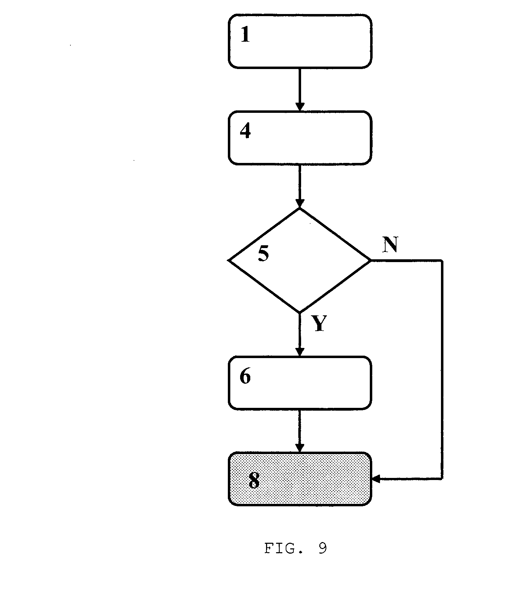

With reference to figures 8 and 9, two approaches will be described for embedding an advertisement delivery with respect to a user's operation. In the first approach, the displaying of advertisement invitation step occurs before the user's operation. In the second approach, the displaying of advertisement invitation step occurs around the user's operation.

In the first approach, illustrated at figure 9, that may be called "invitation first", the advertisement invitation only comprises a single part.

The method starts by detecting 1 an interstitial event of a first type. The method verifies (not figured) if said event is allowed and if no inhibition is active. If No, the advertisement delivery process halts and the method goes directly (not figured) to the execution 8 of the user's operation. If Yes, the invitation of the advertisement is displayed at step 4. Then the user's consent is requested at step 5 for displaying the main part of said advertisement.

If the answer is No, the advertisement delivery process halts and the method goes directly to the execution 8 of the user's operation. If the answer is Yes, the main part of the advertisement is displayed at step 6. At the end of said display, the method goes to the execution 8 of the user's operation.

Such a first approach is better applicable to user's operation that can wait or can be delayed. The events of said first type then correspond to events associated with starting a user's operation that can wait, such as "incoming electronic message", "web browsing open", "electronic message editor start", etc.

A sample scenario for such a first approach may be the following. The user starts a user's operation such as a web browsing. A "web browsing open" interstitial event is then detected at step 1. Said event is then delayed during steps 1-6 depending on the configuration and on the user's choices. At the end, the user's operation is executed at step 8 where the browser is open. In the meantime an advertisement may have been interspaced.

First type interstitial events comprise events related to actions that can be delayed without loosing any important opportunity.

A particular case of first type interstitial event comprises: "end of time interval". For said event, no user's operation is associated, and thus user can wait.

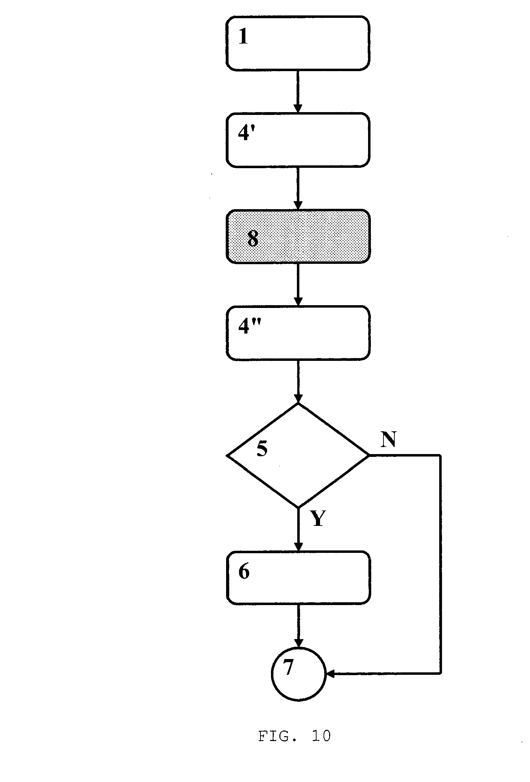

In the second approach, illustrated at figure 10, that may be called "operation first", the advertisement invitation comprises two parts.

The first part is a trailer displayed upon detection of an interstitial event matching the list of interstitial events of the user's profile. It is then very short since operation can not be delayed too much. Its duration may not exceed 3 seconds. It typically comprises a sound part and its purpose is more to draw the user's attention to the service and more particularly to the advertisement itself, than to meaningfully inform the user about the advertisement content. Said first part could be a poster, a video, a text or a banner. The main objective when displaying said first part is to avoid, or at least reduce to the minimum, any interference or modification of user's experience.

The second part could be a little bit longer since it occurs after the user's operation, but it still remains an invitation. Its purpose is mainly to introduce the main part and the request for the user's consent, so it is mainly intended to meaningfully inform the user about the main part's content. It can also advantageously remind the user of the first part, so as to create a repeat.

Both parts may comprise elements among: visual part, sound part, avatar in any combination.

The method starts by detecting 1 an interstitial event of a second type. The method then verifies (not figured) if said event is allowed and if no inhibition is active. If No, the advertisement delivery process halts and the method goes directly (not figured) to the execution 8 of the user's operation. If Yes, the first part of the invitation of the advertisement is displayed at step 4'. At the end of said display, the method starts the execution of the user's operation 8. At the end of the execution of said user's operation, that may be detected by a corresponding event, the method resumes and the second part of the invitation of the advertisement is displayed at step 4". Said displaying step may be conditioned to the previous allowance of step 4'. Then the user's consent is requested at step 5 for displaying the main part of said advertisement.

If the answer is No, the advertisement delivery process halts and the method goes directly to the end step 7. If the answer is Yes, the main part of the advertisement is displayed at step 6. At the end of said display, the method goes to the end step 7.

Such a second approach is better applicable to user's operation that can not wait. The events of said second type then correspond to events associated with starting a user's operation that can not wait.

A sample scenario for such a second approach may be the following. The user wants to edit an electronic message. Upon selection of message editing option a first part invitation is displayed at step 4'.

Then the electronic message may be written by the user, as operation 8. When the user terminates the edition of the electronic message and selects the sending option. the method proceeds with displaying the second part of the invitation at step 4", requesting the user's consent and eventually displaying the main part of advertisement. Here it is the second part of invitation and the main part that are delayed until after the execution of user's operation. At the end the sending notification is displayed to the user

Second type interstitial events comprise events related to operations that can not be delayed without loosing any important opportunity. Second type interstitial event may comprise: "outgoing call setup", "electronic message editor start", "electronic message received", "web browsing open". For each such "starting" event, is correspondingly respectively associated "outgoing call on hook", "electronic message send", "electronic message read", "web browsing close" to indicate the end of user's operation execution.

While some event must be first type event, and some other event must be second type event, some event may be selectively configured to be either first type or second type.

Another example of a second approach may be given in the case of an "Outgoing Call". In that case the advertisement proposal has the following sequence:

1) At "Call Setup" event the first part of invitation is displayed during at most 2-3 seconds, along with animated avatar, and with jingle,
2) The occurrence of a "Call Answer" terminates said display,
3) Call is allowed to progress,
4) The occurrence of an "On Hook" event triggers the display of the second part of invitation, along with animated avatar, and with jingle,
5) A Yes/No choice is proposed to the user to get his consent, at end of said second part display.

In case the interstitial event is an ongoing call, preferably, there is no teaser. Indeed, one cannot foresee whether immediately starting the call is urgent or not. Therefore, the call is not postponed by a teaser.

In that case the advertisement proposal has the following sequence:

1) The application detects an "ingoing call" and does not prevent picking up the call,
3) Call is allowed to progress,
4) The occurrence of an "On Hook" event triggers the display of an invitation, along with an animated avatar and/or with a jingle,
5) A Yes/No choice is requested to the user to get his consent, at end of said invitation display.

Profile update

According to another feature, the method may advantageously generate a log. Said log may e.g. trace the user activity on the device. Among others, the user's answer (Yes or No) when his consent is requested, is recorded in a log. The log also collects the following data: the class and subclasses of the message, time of the presentation, place or social context of the presentation. Optionally, the log may also comprise many parameters related to advertisement such as, an advertisement identifier, the exact location, the operation associated, the events, version of the log, version of the mobile device application, the device model, the device firmware version, etc...

The log is fed to the update algorithm of the profile module. The invention is arranged so that the user's profile is continuously updated thanks to the log, each time a message is refused by the user or is displayed.

The update algorithm enriches a history record with each incoming log. The history records update the level of interest of each class and its related subclasses. Then, the profile may be updated either by each incoming log or only on the basis of the history once a plurality of logs is gathered in the history.

This feature of the invention is further described in regard with the non limiting following example:

Let's assume that the level of interest goes from 0 to 100.

The algorithm can assign points differently whether the current interest level in the profile file is above or below 50.

If the interest is already high, e.g. above 50, the action to accept one advertisement increases the level by 5 points. When refusing to watch the message the level of interest is decreased by 10 points. This way to attribute points is adapted to the long-term user interest: in the long term if the user's interest is above 50, this means that the probability of watching the advert is twice higher than rejecting it.

Considering that the user started with a interest level at 50 and considering that the user previously showed interest in the class (points ≥ 50), if the user's doesn't change drastically of interest, it is more likely that he will accept to view the advertisement:

New Interest = 50 + 5 x nbr of times accepted – 10 x nbr times refused.

If interest ≥ 50 => 5 x nbr of times accepted ≥ 10 x nbr times refused => nbr accepted ≥ 2 * nbr refused

On the opposite: if the user has showed disinterest, starting from an interest level below 50 and he continues to behave more less the same in the long term, the new level of interest is:

New Interest = previous level of interest - 5 x nbr of times rejected + 10 x nbr times accepted.

In order to have the long term interest less than 50, the number of times the user refuses the ad should be twice more important than the number of times he accepts to view the add.

Considering that the user started with a interest level at 50 and considering that the user previously showed interest in the class (point ≥50), if the user's doesn't change drastically of interest, it is more likely that he will decide to view the advertisement:

New Interest = 50 + 10 x nbr of times accepted – 5 x nbr times refused.

If interest < 50 => 10 x nbr of times accepted ≤ 5 x nbr times refused => nbr accepted ≥ 2 * nbr refused.

Thus, the process is a self-updating process and the application learns from itself.

At time 0, when no history is available about the service, the update profile uses the questions or default stereotype to start with.

The questions are proposed to the end-user by the service & personalization module 150. Each different combination, resulting from answers to these questions, corresponds to a pre-defined stereotype. As a reminder, the stereotypes are data file indicating the level of interest for main classes. They are downloaded from the backend 200 and are stored into the update algorithm. Once the update algorithm receives the answers to the question from the service & personalization module 150, it selects the correspondent stereotype and initializes the profile with it.

An example of a set of questions is given below:

Are you older than 25?

Are you female?

Have you a job?

The answers result in 27 different combinations, being possible answers: yes, no, don't care.

| stereotype  Question | Strtp 1 | Strtp 2 | ...... | Strtp n |
|---|---|---|---|---|
| Quest 1 | yes | yes | .... | yes |
| Quest 2 | no | yes | .... | yes |
| Quest 3 | Do not care | no | ..... | yes |

In case the answers are not available, the update profile initializes the profile with a default profile, where all the classes have the same level of interest.

In case the level of interest of a class or subclass is not available or is uncertain, the method carries out the following steps. A message having a header comprising the class to be tested is retrieved. A message invitation is displayed on the device. Then, the device receives the response to the request for consent. Then the level of interest of said class to be tested is updated taking into account the response.

Thus the selected message acts as a probe, through contributing to adjust the level of interest for a specific set of class/subclasses. Preferably, once said probe message is received, it cannot be filtered by the selection algorithm 111. This means that the chart flow in Figure 3 is skipped.

In case a content provider wants his message to be automatically stored on the device without being filtered, then the header contains a specific indication. This indication of the header acts as probe message, skipping thereby the filtering step and leading to an automatic storage of the device.

The update algorithm decides if and how to change the level of interest for specific class/subclasses, so when there are uncertainties or when some classes are missing, it will ask the provisioning module 103 to provide a message belonging to a specific set of class/subclasses and that will be used as a probe message. When the update algorithm receives the log related to the play of the probe, its acceptance or refusal will contribute with a different weight to the definition of the level of interest for the related set of class/subclasses.

Therefore, logs are used locally on the mobile device in order to update the user's profile according to the actual behaviour of the user. This allows constantly updating user's profile even in case communication between the server and the mobile device is interrupted. Therefore, the invention allows significantly increasing the relevancy of the proposed advertisement.

Advantageously, logs are also transferred to the server.

Gathered logs at server may then be statistically analyzed in order to get a global picture of users' behaviour in relation to advertisement. This allows to produce, from the gathered logs, audience qualification reports, useful information to better address the audience and also to learn about users' activity, in order to increase the acceptance toward advertisement.

Advantageously, a log is anonymous, not retaining any identifier of the user. For security purpose against interception during transfer from the device to the server, log is also signed/encrypted using any known ciphering method.

Statistical analyses from the logs are used to select the advertisements that are made available at the server to the mobile device. This first filtering is only based on anonymous data.

Logs sent to the server also allow tracking the messages that are actually displayed. Therefore, the invention allows the advertisers to pay only for the messages that have been actually displayed on the end-user mobile. They do not merely pay the number of provisioning.

In view of the above, detailed description the invention provides at least the following advantages.

The invention preserve user's privacy because no personal information is disclosed, stored or even sent outside the device, resulting thereby in an increase of the service subscription.

The relevancy of the presented content is improved since the selection of the content depends in real time on the user's current activity and on its change of interest.

The tracking of user activity and interest is carried out in real time, without slowing down the device performances and without requiring increased CPU capabilities.

The user controls the service, since he decides the moment of the reception of the content, leading thereby to a non intrusive delivery and higher receptiveness.

The application is law compliant and auditable, based upon secure electronic logs. The user's consent is mandatory for receiving an authenticated content.

From the above description, it will be apparent that various changes may be made without departing from the scope of the invention as defined by the following claims.

**Claims**

1. A method for delivering messages to a device (100) over a network (300) **characterized in that** it comprises the following steps operated at the device (100):

    • determining a user's profile, the user's profile comprising: a plurality of classes, each class being associated to a at least a level of interest, each level of interest being function of at least one of the following parameters: the time, a parameter related to the place of the user, an event mode indicating whether a detected event is an action initiated by the user in order to access a message delivered to the device,
    • storing said user's profile in storage means of the device (100);
    • receiving messages from a server via a network, each message comprising a content and a header, the header comprising a class that relates to the content;
    • defining from the user's profile a probability of interest associated the class of the message;
    • retrieving a threshold of interest;
    • filtering the received message through storing the message in storage means of the device (100) in case the probability of interest associated to the class of the message is higher than the threshold; rejecting the message in case the probability of interest associated to the class of the message is lower than the threshold;
    • detecting (1) an event and determining (2) whether said event matches at least one event type comprised in a predetermined list of event types;
    • if said event matches at least one event type of the predetermined list, then retrieving data related to at least one of the following parameters: the current time, a data related to the current place of the user, an event mode of said detected event,
    • retrieving in the user's profile classes based on said retrieved data, then ranking the retrieved classes in function of at least their associated level of interest, then selecting one class among the ranked classes,
    • selecting (3) a message stored in the device (100) and having a header comprising said selected class;
    • displaying (4) on the device (100) a message invitation, the message invitation requesting (5) from the user a consent to display (4) the content of the message;
    • receiving from the user a response to the request;
    • updating in the user's profile the level of interest of the selected class taking into account the response.

2. The method according to the preceding claim, wherein the probability of interest is computed from a general level of interest associated to the class of the message, the class being associated to a plurality of levels of interest, each level of interest being function of at least one of said parameters and wherein the general level of interest is the average of at least some levels of interest of that class.

3. The method according to any one of the preceding claims, wherein the place is a social context taken among at least one of the following: "home", "work", "leisure", "other"; each social context being associated to a time interval and a day; at a given moment, the determination of the place of the user being based on the time and the day of said given moment.

4. The method according to any preceding claims, wherein prior to receiving a message from the server, a provisioning module of the device receives from the server a provisioning indication that indicates to the device that new messages are available at the server.

5. The method according to any preceding claims, wherein a class may comprise a plurality of classes of lower level or be part of a plurality of classes of higher level.

6. The method according to any one of the preceding claim, wherein the header indicates a stereotype, a stereotype being defined through a file comprising a plurality of classes, each class being associated to a level of interest, wherein upon reception of a message, the steps of defining from the user's profile a probability of interest and the step of retrieving a threshold of interest are replaced by comparing the stereotype of the header and the user's profile, and wherein:

    • in case the stereotype of the header is matches the user's profile, then storing the message in storage means of the device, skipping thereby the steps of defining from the user's profile a probability of interest and the step of retrieving a threshold of interest,
• otherwise, proceeding to the steps of defining from the user's profile a probability of interest and the step of retrieving a threshold of interest.

7. The method according to the preceding claim wherein the step of comparing the stereotype indicated in the header and the user's profile comprising the steps of:

• for each class that is present in both stereotype and user's profile, comparing the level of interest of that class as indicated in the stereotype with an average of levels of interest stored in the user's profile for that class,
• based on that comparison, determining whether the stereotype matches the user's profile,
• in case the stereotype matches the user's profile, then storing the message in the device, otherwise rejecting the message.

8. The method according to any one of the two preceding claims, wherein the header comprises a rule that indicates a stereotype corresponding to the user's profile for which the message must be automatically rejected, skipping thereby the steps of defining from the user's profile a general level of interest associated the class of the message and the step of determining a threshold of interest.

9. The method according to any one of the preceding claims, wherein the step of ranking the classes comprises ranking the classes according to their respective level of interest only and the step of selecting one class among the ranked classes comprises selecting the class having the highest rank.

10. The method according to any one of claims 1 to 8, wherein the step of selecting one class among the ranked classes comprises the following steps:

• selecting a set of classes having a rank higher than a selection threshold or selecting in the user's profile a set of classes through retrieving a predetermined number of classes having the highest rank of interest;
• among said set of classes, selecting one class through applying a rotation or a random criteria to said set of classes, preventing thereby to select the same class each time retrieved data are identical.

11. The method according to any one of the preceding claims, wherein updating in the user's profile the level of interest of the selected class comprises creating a log that collects at least data related to the class of the message, the time of the display, the place of the display, the response of the user to the request for consent, and wherein the log is used to update the level of interest of the class of the displayed message.

12. The method according to the preceding claim, wherein:

• if the user consents to the display of the message, then the level of interest of the class of the displayed message is increased by a first predetermined number of points,
• if the user rejects the display of a message, then the level of interest of the class of the displayed message is decreased by a second predetermined number of points.

13. The method according to any one of the preceding claims, wherein when the user's profile does not comprise classes associated to levels of interest, then the user's profile is initialized through conducting the following steps:

• storing in the device a plurality of stereotypes, each stereotype corresponding to a predefined profile and associating a level of interest for each class of a plurality of classes,
• asking questions to the user,
• based on the replies to the questions, identifying a stereotype,
• initializing the user's profile with the levels of interest of the identified stereotype.

14. The method according to any one of the preceding claims, wherein updating the profile of the user comprises the following steps:

• selecting a class to be tested for which the level of interest is not available or is uncertain,
• selecting a message having a header comprising said class to be tested,
• displaying (4) on the device a message invitation, the message invitation requesting (5) from the user a consent to display (4) on the device the content of said message,

• receiving from the user a response to the request,
• updating in the user's profile the level of interest of said class to be tested taking into account the response.

15. A system for delivering messages to a device (100) over network (300), **characterized in that** the device (100) comprises:

• a profile module (110) arranged for determining a user's profile, the user's profile comprising: a plurality of classes; a least a level of interest associated to each class, the level of interest depending on the class and on at least one of the following parameters: the time, the place of the user, an event mode, the event mode indicating whether a detected event is an action initiated by the user in order to access a message delivered to the device,
• a profile file (113) comprising storage means for storing said user's profile;
• reception means (102) for receiving from a server via a network messages, each message comprising a content and a header, the header comprising a class that relates to the content;
the profile module (110) being arranged for:

• defining from the user's profile a probability of interest associated the class of the message;
• determining a threshold of interest;
• filtering the received message through storing the message in storage means of the device in case the probability of interest associated to the class of the message is higher than the threshold; rejecting the message from the device in case the probability of interest associated to the class of the message is lower than the threshold;
• detecting (1) an event and determining (2) whether said event matches at least one event type of a list of event types stored in the device;
• if said event matches at least one event type, then retrieving data related to at least one of the following parameters: the current time, a parameter related to the current place of the user, an event mode of said detected event;
• retrieving in the user's profile classes based on said retrieved data, then ranking the retrieved classes in function of at least their associated level of interest, then selecting one class among the ranked classes,
• selecting a message stored in the device and having a header comprising said selected class;
the device comprising:

• display means (170) for displaying (4) on the device a message invitation, the message invitation requesting (5) from the user a consent to display (4) on the device the content of the message,
• a user interface for receiving from the user a response to the request,
the device (100) being arranged for updating in the user's profile (110) the level of interest of the selected class taking into account the response.

**Patentansprüche**

1. Verfahren zur Lieferung von Nachrichten an eine Vorrichtung (100) über ein Netzwerk (300), **dadurch gekennzeichnet, dass** es die folgenden, an der Vorrichtung (100) durchgeführten Schritte umfasst:

\* Bestimmung eines Benutzerprofils, wobei das Benutzerprofil umfasst: eine Vielzahl von Klassen, wobei jede Klasse wenigstens einer Wichtigkeitsstufe zugeordnet ist, wobei jede Wichtigkeitsstufe von wenigstens einem der folgenden Parameter abhängt: der Zeit, einem mit dem Ort des Benutzers verbundenen Parameter, einem Ereignismodus, der anzeigt, ob ein festgestelltes Ereignis eine vom Benutzer initiierte Aktion ist, um auf eine an die Vorrichtung gelieferte Nachricht zuzugreifen,
\* Speicherung des genannten Benutzerprofils in Speichermitteln der Vorrichtung (100);
\* Empfangen von Nachrichten von einem Server über ein Netzwerk, wobei jede Nachricht einen Inhalt und eine Kopfzeile umfasst, wobei die Kopfzeile eine Klasse umfasst, die sich auf den Inhalt bezieht;
\* Definition einer der Klasse der Nachricht zugeordneten Wichtigkeitswahrscheinlichkeit ausgehend von dem Benutzerprofil;
\* Abrufen eines Wichtigkeitsschwellenwertes;
\* Filtern der empfangenen Nachricht durch Speichern der Nachricht in Speichermitteln des Geräts (100) für den Fall, dass die der Klasse der Nachricht zugeordnete Wichtigkeitswahrscheinlichkeit höher ist als der Schwellenwert; Ablehnung der Nachricht für den Fall, dass die Wahrscheinlichkeit der der Klasse der Nachricht zugeordnete Wichtigkeit niedriger ist als der Schwellenwert;

* Erfassung (1) eines Ereignisses und Bestimmung (2), ob das genannte Ereignis wenigstens zu einem Ereignistyp passt, der in einer vorbestimmten Liste von Ereignistypen inbegriffen ist;
* Wenn das genannte Ereignis wenigstens zu einem Ereignistyp der vorbestimmten Liste passt, dann Abfragen von wenigstens mit einer der folgenden Parameter verbundenen Angaben: die aktuelle Zeit, eine mit dem aktuellen Ort des Benutzers verbundene Angabe, ein Ereignismodus des genannten festgestellten Ereignisses,
* Abrufen von Klassen im Benutzerprofil basierend auf den genannten abgerufenen Daten, dann Einstufung der abgerufenen Daten in Abhängigkeit von wenigstens ihrer zugeordneten Wichtigkeitsstufe, dann Auswahl einer Klasse unter den eingestuften Klassen,
* Auswahl (3) einer in der Vorrichtung (100) gespeicherten Nachricht, die eine die genannte ausgewählte Klasse umfassende Kopfzeile hat;
* Anzeige (4) einer Nachrichtenaufforderung in dem Gerät (100), wobei die Nachrichtenaufforderung von dem Benutzer eine Zustimmung zur Anzeige (4) des Inhaltes der Nachricht anfordert (5);
* Empfang einer Antwort auf die Anfrage durch den Benutzer;
* Aktualisierung der Wichtigkeitsstufe der ausgewählten Klasse in dem Benutzerprofil unter Berücksichtigung der Antwort.

2. Verfahren gemäß dem voranstehenden Anspruch, bei dem die Wichtigkeitswahrscheinlichkeit aus einer der Klasse der Nachricht zugeordneten allgemeinen Wichtigkeitsstufe berechnet wird, wobei die Klasse einer Vielzahl von Wichtigkeitsstufen zugeordnet ist, wobei jede Wichtigkeitsstufe von wenigstens einem der genannten Parameter abhängt und wobei die allgemeine Wichtigkeitsstufe der Durchschnitt von wenigstens einigen Wichtigkeitsstufen der Klasse ist.

3. Verfahren gemäß einem der voranstehenden Ansprüche, bei dem der Ort ein sozialer Kontext ist, der aus wenigstens einem der Folgenden gewählt ist:

   "zuhause", "Arbeit", "Freizeit", "Sonstiges"; wobei jeder soziale Kontext einem zeitlichen Intervall und einem Tag zugeordnet ist; zu einem bestimmten Zeitpunkt basiert die Bestimmung des Ortes des Benutzers auf der Zeit und dem Tag des genannten bestimmten Moments.

4. Verfahren gemäß einem der voranstehenden Ansprüche, bei dem vor dem Empfang einer Nachricht vom Server ein Beschaffungsmodul der Vorrichtung von dem Server eine Beschaffungsangabe empfängt, die der Vorrichtung anzeigt, dass neue Nachrichten im Server verfügbar sind.

5. Verfahren gemäß einem der voranstehenden Ansprüche, bei dem eine Klasse eine Vielzahl von Klassen einer niedrigeren Stufe umfassen oder Bestandteil einer Vielzahl von Klassen einer höheren Stufe sein kann.

6. Verfahren gemäß einem der voranstehenden Ansprüche, bei dem die Kopfzeile einen Stereotyp anzeigt, wobei ein Stereotyp durch eine eine Vielzahl von Klassen umfassende Datei definiert wird, wobei jede Klasse einer Wichtigkeitsstufe zugeordnet wird, bei dem bei Empfang einer Nachricht die Stufen der Definition einer Wichtigkeitswahrscheinlichkeit aus dem Benutzerprofil und die Abrufstufe eines Wichtigkeitsschwellenwertes durch den Vergleich des Stereotyps der Kopfzeile und des Benutzerprofils ersetzt werden, und bei dem:

   * In dem Fall, in dem der Stereotyp der Kopfzeile zu dem Benutzerprofil passt, dann die Nachricht in Speichermitteln der Vorrichtung gespeichert wird, die Definitionsstufen einer Wichtigkeitswahrscheinlichkeit des Benutzerprofils und die Abrufstufe eines Wichtigkeitsschwellenwertes ausgehend vom Benutzerprofil übersprungen werden,
   * andernfalls Durchführung der Definitionsstufen einer Wichtigkeitswahrscheinlichkeit und der Abrufstufe eines Wichtigkeitsschwellenwertes ausgehend vom Benutzerprofil.

7. Verfahren gemäß dem voranstehenden Anspruch, bei dem die Vergleichsstufe des in der Kopfzeile angegebenen Stereotyps und dem Benutzerprofil die Stufen umfasst:

   * für jede Klasse, die sowohl im Stereotyp und dem Benutzerprofil vorhanden ist, Vergleich der Wichtigkeitsstufe der Klasse wie im Stereotyp angegeben mit einem Durchschnitt der im Benutzerprofil für die Klasse gespeicherten Wichtigkeitsstufen,
   * basierend auf dem Vergleich Bestimmung, ob der Stereotyp zum Benutzerprofil passt,
   * In dem Fall, in dem der Stereotyp zum Benutzerprofil passt, dann Speichern der Nachricht in der Vorrichtung, andernfalls Ablehnung der Nachricht.

8.  Verfahren gemäß einem der zwei voranstehenden Ansprüche, bei dem die Kopfzeile eine Regel umfasst, die einen Stereotyp angibt, der dem Benutzerprofil entspricht, für den die Nachricht automatisch abgelehnt werden muss, wodurch die Definitionsstufen einer der Klasse der Nachricht zugeordneten allgemeinen Wichtigkeitsstufe und der Bestimmungsstufe eines Wichtigkeitsschwellenwertes ausgehend vom Benutzerprofil übersprungen werden.

9.  Verfahren gemäß einem der voranstehenden Ansprüche, bei dem die Einstufungsstufe der Klassen die Einstufung der Klassen nur nach ihrer jeweiligen Wichtigkeitsstufe umfasst und die Auswahlstufe einer Klasse aus den eingestuften Klassen die Auswahl der Klasse mit der höchsten Einstufung umfasst.

10. Verfahren gemäß Anspruch 1 bis 8, bei dem die Auswahlstufe einer Klasse aus den eingestuften Klassen die folgenden Stufen umfasst:

    * Auswahl eines Satzes von Klassen mit einer höheren Einstufung als ein Auswahlschwellenwert oder Auswahl eines Satzes von Klassen im Benutzerprofil durch Abrufen einer vorbestimmten Anzahl von Klassen mit der höchsten Wichtigkeitseinstufung;
    * aus dem genannten Satz von Klassen Auswahl einer Klasse durch die Anwendung einer Rotation oder eines zufälligen Kriteriums für den genannten Satz von Klassen, wodurch jedes Mal, wenn die abgerufenen Daten identisch sind, die Auswahl derselben Klasse verhindert wird.

11. Verfahren gemäß einem der voranstehenden Ansprüche, bei dem ein Update der Wichtigkeitsstufe der ausgewählten Klasse im Benutzerprofil die Erstellung eines Protokolls umfasst, das wenigstens mit der Klasse der Nachricht, der Zeit der Anzeige, dem Ort der Anzeige, der Antwort des Benutzers auf die Anfrage einer Zustimmung verbundene Daten erfasst, und bei dem das Protokoll zur Aktualisierung der Wichtigkeitsstufe der angezeigten Nachricht verwendet wird.

12. Verfahren gemäß dem voranstehenden Anspruch, bei dem:

    * wenn der Benutzer der Anzeige der Meldung zustimmt, die Wichtigkeitsstufe der Klasse der angezeigten Meldung dann durch eine erste, vorbestimmte Anzahl an Punkten erhöht wird,
    * wenn der Benutzer die Anzeige einer Nachricht ablehnt, wird die Wichtigkeitsstufe der Klasse der angezeigten Nachricht dann um eine zweite vorbestimmte Anzahl an Punkten gesenkt.

13. Verfahren gemäß einem der voranstehenden Ansprüche, bei dem, wenn das Benutzerprofil kein einer Wichtigkeitsstufe zugeordnetes Profil umfasst, das Benutzerprofil dann durch die Durchführung der folgenden Stufen initialisiert wird:

    * Speicherung einer Vielzahl von Stereotypen in der Vorrichtung, wobei jeder Stereotyp einem vorbestimmten Profil entspricht und eine Wichtigkeitsstufe für jede Klasse einer Vielzahl von Klassen zuordnet,
    * Dem Benutzer Fragen stellen,
    * Identifizierung eines Stereotyps basierend auf den Antworten auf die Fragen,
    * Initialisierung des Benutzerprofils mit den Wichtigkeitsstufen des identifizierten Stereotyps.

14. Verfahren gemäß einem der voranstehenden Ansprüche, bei dem die Aktualisierung des Benutzerprofils die folgenden Stufen umfasst:

    * Auswahl einer zu testenden Klasse, für die die Wichtigkeitsstufe nicht verfügbar ist oder unsicher ist,
    * Auswahl einer Nachricht mit einer Kopfzeile, die die genannte, zu testende Klasse umfasst,
    * Anzeige (4) einer Aufforderungsnachricht auf der Vorrichtung, wobei die Aufforderungsnachricht vom Benutzer eine Zustimmung für die Anzeige (4) des Inhaltes der genannten Nachricht auf der Vorrichtung anfordert (5),
    * Empfang einer Antwort vom Benutzer auf die Anforderung,
    * Aktualisierung der Wichtigkeitsstufe der genannten zu testenden Klasse im Benutzerprofil unter Berücksichtigung der Antwort.

15. System zur Lieferung von Nachrichten an eine Vorrichtung (100) über ein Netzwerk (300), **dadurch gekennzeichnet, dass** die Vorrichtung (100) umfasst:

    * ein für die Bestimmung des Benutzerprofils angeordnetes Profilmodul (110), wobei das Benutzerprofil umfasst: eine Vielzahl von Klassen; wenigstens eine jeder Klasse zugeordnete Wichtigkeitsstufe, wobei die Wichtigkeitsstufe von der Klasse und von wenigstens einem der folgenden Parameter abhängt: der Zeit, dem Ort des Benutzers, einem Ereignismodus, wobei der Ereignismodus anzeigt, ob ein festgestelltes Ereignis eine Aktion ist, die vom Benutzer initiiert wird, um auf eine von der Vorrichtung ausgegebene Nachricht zuzugreifen;
* eine Speichermittel zum Speichern des genannten Benutzerprofils umfassende Profildatei (113);
*Empfangsmittel (102) zum Empfang von Nachrichten von einem Server über ein Netzwerk, wobei jede Nachricht einen Inhalt und eine Kopfzeile umfasst, wobei die Kopfzeile eine Klasse umfasst, die sich auf den Inhalt bezieht; wobei das Profilmodul (110) angeordnet ist zum:

* Definieren einer der Klasse der Nachricht zugeordneten Wichtigkeitswahrscheinlichkeit ausgehend vom Benutzerprofil;
* Bestimmen eines Wichtigkeitsschwellenwertes;
* Filtern der empfangenen Nachricht durch das Speichern der Nachricht in Speichermitteln der Vorrichtung in dem Fall, in dem die der Klasse der Nachricht zugeordnete Wichtigkeitswahrscheinlichkeit höher ist als der Schwellenwert; Ablehnung der Nachricht von der Vorrichtung in dem Fall, in dem die der Klasse der Nachricht zugeordnete Wichtigkeitswahrscheinlichkeit niedriger ist als der Schwellenwert;
* Feststellen (1) eines Ereignisses und Bestimmen (2), ob das genannte Ereignis wenigstens zu einem Ereignistyp einer Liste von in der Vorrichtung gespeicherten Ereignistypen passt;
* wenn das genannte Ereignis wenigstens zu einem Ereignistyp passt, dann Abrufen der wenigstens mit einem der folgenden Parameter verbundenen Daten: der aktuellen Zeit, einem mit dem aktuellen Ort des Benutzers verbundenen Parameter, einem Ereignismodus des genannten festgestellten Ereignisses;
* Abrufen von Klassen im Benutzerprofil basierend auf den genannten abgerufenen Daten, dann Einstufung der abgerufenen Klassen in Abhängigkeit von wenigstens ihrer zugeordneten Wichtigkeitsstufe, dann Auswahl einer Klasse aus den eingestuften Klassen,
* Auswahl einer in der Vorrichtung gespeicherten Nachricht, die eine die genannte ausgewählte Klasse umfassende Kopfzeile hat;
wobei die Vorrichtung umfasst:

* Anzeigemittel (170) zur Anzeige (4) einer Nachrichtenaufforderung auf der Vorrichtung, wobei die Nachrichtenaufforderung vom Benutzer eine Zustimmung zur Anzeige (4) des Inhaltes der Nachricht auf der Vorrichtung anfordert (5),
* eine Benutzerschnittstelle zum Empfang einer Antwort auf die Aufforderung vom Benutzer, wobei die Vorrichtung (100) zur Aktualisierung der Wichtigkeitsstufe der ausgewählten Klasse im Benutzerprofil (110) unter Berücksichtigung der Antwort angeordnet ist.

**Revendications**

1. Procédé pour fournir des messages à un dispositif (100) dans un réseau (300) **caractérisé en ce qu'**il comprend les étapes suivantes mises en oeuvre au niveau du dispositif (100) :

    - détermination d'un profil utilisateur, le profil utilisateur comprenant : une pluralité de classes, chaque classe étant associée à au moins un niveau d'intérêt, chaque niveau d'intérêt étant fonction d'au moins l'un des paramètres suivants :

        l'heure, un paramètre lié à l'emplacement de l'utilisateur, un mode événement indiquant si un événement détecté est une action initiée par l'utilisateur afin d'avoir accès à un message fourni au dispositif,

    - mémorisation dudit profil utilisateur dans les moyens de stockage du dispositif (100) ;
    - réception de messages d'un serveur via un réseau, chaque message comprenant un contenu et un en-tête, l'en-tête comprenant une classe qui est liée au contenu ;
    - définition, à partir du profil utilisateur, d'une probabilité d'intérêt associée à la classe du message ;
    - récupération d'un seuil d'intérét ;
    - filtrage du message reçu en mémorisant le message dans les moyens de stockage du dispositif (100) dans le cas où la probabilité d'intérêt associée à la classe du message est supérieure au seuil ; rejet du message dans le cas où la probabilité d'intérêt associée à la classe du message est inférieure au seuil ;
    - détection (1) d'un événement et détermination (2) si ledit événement correspond à au moins un type d'événement compris dans une liste prédéterminée de types d'événements ;
    - si ledit événement correspond à au moins un type d'événement de la liste prédéterminée, alors récupération de données liées à au moins l'un des paramètres suivants : l'heure actuelle, une donnée liée à l'emplacement actuel de l'utilisateur, un mode événement dudit événement détecté,
- récupération dans le profil utilisateur en se fondant sur lesdites données récupérées, puis ordonnancement des classes recherchées en fonction d'au moins leur niveau d'intérêt associé, puis sélection d'une classe parmi les classes ordonnées,
- sélection (3) d'un message mémorisé dans le dispositif (100) et muni d'un en-tête comprenant ladite classe sélectionnée ;
- affichage (4) sur le dispositif (100) d'une invitation par message, l'invitation par message demandant (5) à l'utilisateur une autorisation d'afficher (4) le contenu du message ;
- réception d'une réponse de l'utilisateur à la demande ;
- mise à jour dans le profil utilisateur du niveau d'intérêt de la classe sélectionnée en prenant en compte la réponse.

2. Procédé selon la revendication précédente, dans lequel la probabilité d'intérêt est calculée à partir d'un niveau d'intérêt général associé à la classe du message, la classe étant associée à une pluralité de niveaux d'intérêt, chaque niveau d'intérêt étant fonction d'au moins l'un parmi lesdits paramètres et dans lequel le niveau d'intérêt général est la moyenne d'au moins certains niveaux d'intérêt de cette classe.

3. Procédé selon l'une quelconque des revendications précédentes, dans lequel l'emplacement est un contexte social pris parmi au moins l'un des contextes suivants : "maison", "travail", "loisir", "autre" ; chaque contexte social étant associé à un intervalle de temps et à une journée ; à un moment donné, la détermination de l'emplacement de l'utilisateur étant fondée sur l'heure et le jour dudit moment donné.

4. Procédé selon l'une quelconque des revendications précédentes, dans lequel, avant de recevoir un message du serveur, un module d'approvisionnement du dispositif reçoit du serveur une indication d'approvisionnement qui indique au dispositif que des nouveaux messages sont disponibles au niveau du serveur.

5. Procédé selon l'une quelconque des revendications précédentes, dans lequel une classe peut comprendre une pluralité de classes de niveau inférieur ou faire partie d'une pluralité de classes de niveau supérieur.

6. Procédé selon l'une quelconque des revendications précédentes, dans lequel l'en-tête indique un stéréotype, un stéréotype étant défini par l'intermédiaire d'un fichier comprenant une pluralité de classes, chaque classe étant associée à un niveau d'intérêt, dans lequel, au moment de la réception d'un message, les étapes consistant à définir, à partir du profil utilisateur, une probabilité d'intérêt et l'étape consistant à récupérer un seuil d'intérêt sont remplacées par une comparaison du stéréotype de l'en-tête et du profil utilisateur, et dans lequel :

- dans le cas où le stéréotype de l'en-tête correspond au profil utilisateur, alors mémorisation du message dans les moyens de stockage du dispositif, en ignorant ainsi les étapes consistant à définir à partir du profil utilisateur une probabilité d'intérêt et l'étape consistant à récupérer un seuil d'intérêt,
- sinon, réalisation des étapes consistant à définir, à partir du profil utilisateur une probabilité d'intérêt et de l'étape consistant à récupérer un seuil d'intérêt.

7. Procédé selon la revendication précédente, dans lequel l'étape de comparaison du stéréotype indiqué dans l'en-tête et le profil utilisateur comprend les étapes consistant à :

- pour chaque classe qui est présente à la fois dans le stéréotype et dans le profil utilisateur, comparaison du niveau d'intérêt de cette classe tel qu'indiqué dans le stéréotype avec une moyenne des niveaux d'intérêt mémorisés dans le profil utilisateur pour cette classe,
- en se fondant sur cette comparaison, détermination si le stéréotype correspond au profil utilisateur,
- dans le cas où le stéréotype correspond au profil utilisateur, mémorisation du message dans le dispositif, ou sinon rejet du message.

8. Procédé selon l'une quelconque des deux revendications précédentes, dans lequel l'en-tête comprend une règle qui indique un stéréotype correspondant au profil utilisateur pour lequel le message doit être automatiquement rejeté, en ignorant ainsi les étapes consistant à définir dans le profil utilisateur un niveau d'intérêt général associé à la classe du message et l'étape consistant à déterminer un seuil d'intérêt.

9. Procédé selon l'une quelconque des revendications précédentes, dans lequel l'étape consistant à ordonner les classes comprend l'ordonnancement des classes selon leur niveau d'intérêt respectif uniquement et l'étape consistant à sélectionner une classe parmi les classes ordonnées comprend la sélection de la classe ayant le rang le plus élevé.

**10.** Procédé selon l'une quelconque des revendications 1 à 8, dans lequel l'étape de sélection d'une classe parmi les classes ordonnées comprend les étapes suivantes :

- sélection d'un jeu de classes ayant un rang supérieur à un seuil de sélection ou sélection dans le profil utilisateur d'un jeu de classes en recherchant un nombre prédéterminé de classes ayant le rang d'intérêt le plus élevé ;
- parmi ledit jeu de classes, sélection d'une classe en appliquant une rotation ou un critère aléatoire au dit jeu de classes, en empêchant ainsi la sélection de la même classe chaque fois que les données récupérées sont identiques.

**11.** Procédé selon l'une quelconque des revendications précédentes, dans lequel la mise à jour dans le profil utilisateur du niveau d'intérêt de la classe sélectionnée comprend la création d'un journal qui collecte au moins les données liées à la classe du message, l'heure de l'affichage, l'emplacement de l'affichage, la réponse de l'utilisateur à la demande d'autorisation, et dans lequel le journal est utilisé pour mettre à jour le niveau d'intérêt de la classe du message affiché.

**12.** Procédé selon la revendication précédente, dans lequel :

- si l'utilisateur autorise l'affichage du message, alors le niveau d'intérêt de la classe du message affiché augmente d'un nombre prédéterminé de points,
- si l'utilisateur rejette l'affichage d'un message, alors le niveau d'intérêt de la classe du message affiché diminue d'un second nombre de points prédéterminé.

**13.** Procédé selon l'une quelconque des revendications précédentes, dans lequel, lorsque le profil utilisateur ne comprend pas de classes associées à des niveaux d'intérêt, alors le profil utilisateur est initialisé en effectuant les étapes suivantes :

- mémorisation dans le dispositif d'une pluralité de stéréotypes, chaque stéréotype correspondant à un profil prédéfini et association d'un niveau d'intérêt pour chaque classe parmi une pluralité de classes,
- questionnement de l'utilisateur,
- identification d'un stéréotype en se fondant sur les réponses aux questions,
- initialisation du profil utilisateur avec les niveaux d'intérêt du stéréotype identifié.

**14.** Procédé selon l'une quelconque des revendications précédentes, dans lequel la mise à jour du profil utilisateur comprend les étapes suivantes :

- sélection d'une classe à tester, pour laquelle le niveau d'intérêt n'est pas disponible ou est incertain,
- sélection d'un message muni d'un en-tête comprenant ladite classe à tester,
- affichage (4) sur le dispositif d'une invitation par message, l'invitation par message demandant (5) à l'utilisateur une autorisation d'afficher (4) sur le dispositif le contenu dudit message,
- réception d'une réponse de l'utilisateur à la demande,
- mise à jour dans le profil utilisateur du niveau d'intérêt de ladite classe à tester, en prenant en compte la réponse.

**15.** Système de fourniture de messages à un dispositif (100) dans un réseau (300), **caractérisé en ce que** le dispositif (100) comprend :

- un module de profil (110) agencé de manière à déterminer un profil utilisateur, le profil utilisateur comprenant : une pluralité de classes ; au moins un niveau d'intérêt associé à chaque classe, le niveau d'intérêt dépendant de la classe et d'au moins l'un parmi les paramètres suivants : l'heure, l'emplacement de l'utilisateur, un mode événement, le mode événement indiquant si un événement détecté est une action initiée par l'utilisateur afin d'avoir accès à un message fourni au dispositif,
- un fichier de profil (113) comprenant des moyens de stockage permettant de mémoriser ledit profil utilisateur ;
- des moyens de réception (102) permettant de recevoir du serveur, via des messages réseau, chaque message comprenant un contenu et un en-tête, l'en-tête comprenant une classe qui est liée au contenu ;
le module de profil (110) étant agencé de manière à :

EP 2 391 090 B1

- définir à partir du profil utilisateur une probabilité d'intérêt associée à la classe du message ;
- déterminer un seuil d'intérêt ;
- filtrer le message reçu en mémorisant le message dans les moyens de stockage du dispositif pour le cas où la probabilité d'intérêt associée à la classe du message est supérieure au seuil ; rejeter le message du dispositif pour le cas où la probabilité d'intérêt associée à la classe du message est inférieure au seuil ;
- détecter (1) un événement et déterminer (2) si ledit événement correspond à au moins un type d'événement d'une liste de types d'événements mémorisée dans le dispositif ;
- si ledit événement correspond à au moins un type d'événement, récupération ensuite des données liées à au moins l'un des paramètres suivants :

l'heure actuelle, un paramètre lié à l'emplacement actuel de l'utilisateur, un mode événement dudit événement détecté ;

- récupérer dans le profil utilisateur les classes fondées sur lesdites données récupérées, puis ordonner les classes recherchées en fonction d'au moins leur niveau d'intérêt, puis sélectionner une classe parmi les classes ordonnées,
- sélectionner un message mémorisé dans le dispositif et muni d'un en-tête comprenant ladite classe sélectionnée ;
le dispositif comprenant :

- des moyens d'affichage (170) permettant d'afficher (4) sur le dispositif une invitation par message, l'invitation par message demandant (5) à l'utilisateur son autorisation d'afficher (4) sur le dispositif le contenu du message,
- une interface utilisateur permettant de recevoir de l'utilisateur une réponse à la demande, le dispositif (100) étant agencé pour mettre à jour dans le profil utilisateur (110) le niveau d'intérêt de la classe sélectionnée en prenant en compte la réponse.

26

100  101

device

Device application

backend

| Contents & class/subclass | Native Telephony API | Provisioning module | Profile module |

Network interface

200  300  102  103  110

FIG. 1

| Provisioning module | Selection algorithm | profile |

113

| Content storage |

103  111  140

FIG. 2

FIG. 3

FIG. 4

FIG. 5

150

Service &personalization

113

play

profile

170

160

synchronization

provisioning

103

FIG. 6

FIG. 7

FIG. 8

FIG. 9

FIG. 10

FIG. 11

**EP 2 391 090 B1**

**Patent documents cited in the description**

- WO 2005086437 A